(19) Europäisches Patentamt / European Patent Office / Office européen des brevets

(11) **EP 2 676 348 B1**

(12) **FASCICULE DE BREVET EUROPEEN**

(45) Date de publication et mention
de la délivrance du brevet:
**05.12.2018 Bulletin 2018/49**

(21) Numéro de dépôt: **12707714.7**

(22) Date de dépôt: **14.02.2012**

(51) Int Cl.:
*H02J 3/26* *(2006.01)*       *H02J 3/14* *(2006.01)*

(86) Numéro de dépôt international:
**PCT/EP2012/052444**

(87) Numéro de publication internationale:
**WO 2012/110472 (23.08.2012 Gazette 2012/34)**

(54) **DISPOSITIF D'EQUILIBRAGE DE CHARGE SUR UN RESEAU POLYPHASE**

LASTAUSGLEICHSVORRICHTUNG IN EINEM MEHRPHASIGEN NETZWERK

LOAD-BALANCING DEVICE ON A POLYPHASE NETWORK

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **18.02.2011 FR 1151364**

(43) Date de publication de la demande:
**25.12.2013 Bulletin 2013/52**

(73) Titulaire: **Commissariat à l'Énergie Atomique
et aux Énergies Alternatives
75015 Paris (FR)**

(72) Inventeur: **GUILLEMIN, Sylvain
38580 Allevard Les Bains (FR)**

(74) Mandataire: **Guérin, Jean-Philippe et al
Opilex
310 avenue Berthelot
69008 Lyon (FR)**

(56) Documents cités:
**WO-A1-98/26489        DE-A1-102008 027 887
US-A- 4 177 508        US-A- 5 181 180
US-A- 5 281 859        US-A1- 2004 196 604**

**Description**

L'invention concerne les réseaux électriques polyphasés, et en particulier l'équilibrage de réseaux polyphasés alimentant une multitude de charges monophasées.

Le document WO98/26489 décrit un appareil pour uniformiser la répartition des charges électriques sur un réseau de distribution de puissance polyphasé. Des sondes de courant effectuent une mesure de courant pour chaque phase entrante et dans chaque branche du réseau alimenté. Un processeur analyse les mesures des sondes de courant. Chaque branche comporte un commutateur multipolaire et un sectionneur. Le processeur est connecté à chaque interrupteur pour connecter sélectivement chaque branche à une unique phase appropriée après avoir interrompu son alimentation au moyen de son sectionneur. Ainsi, les charges électriques sont réparties par le processeur sur les différentes phases.

Dans les réseaux électriques, le transport de l'électricité est généralement effectué par des réseaux triphasés jusqu'au lieu de distribution. Pour des raisons de simplicité structurelle et de niveau de tension, la plupart des charges connectées au réseau électrique sont des charges monophasées. Une charge monophasée est connectée entre une phase et le neutre du réseau triphasé. Un grand nombre de charges monophasées est généralement connecté au réseau triphasé. Du fait des différences de puissance des charges connectées sur ces trois phases, le réseau triphasé subit des déséquilibres entre les phases. Les courants débités par les différentes phases sont alors différents, ce qui peut conduire à des chutes de tension, des pertes d'énergie, une limitation du nombre de charges connectables, une dégradation de la qualité du courant, et/ou une surcharge de la génératrice d'électricité. Lorsqu'une installation photovoltaïque alimente le réseau triphasé, il peut même s'avérer nécessaire d'injecter du courant depuis un réseau externe basé sur d'autres sources d'énergie pour équilibrer les courants sur les différentes phases.

Lorsque l'exploitant du réseau électrique triphasé constate des déséquilibres de phase récurrents, il procède à des rééquilibrages. Dans le cadre de réseaux électriques, les charges sont le plus souvent des transformateurs monophasés qui fournissent de l'énergie à un petit groupe de logements. Lorsqu'un déséquilibre de phase récurrent est constaté, une nouvelle répartition des charges est conçue. Un technicien intervient alors directement sur un ou plusieurs transformateurs pour les connecter à d'autres phases.

Pour éviter une conception empirique de la nouvelle répartition des charges, le document intitulé « phase swapping for distribution system using tabu search » propose un algorithme d'optimisation de la répartition de ces charges.

Même en optimisant la répartition des charges sur le réseau triphasé, une intervention technique manuelle reste nécessaire, ce qui limite fortement la fréquence des modifications de répartition réalisables. Une telle intervention nécessite en outre un arrêt d'une ou plusieurs charges, ce qui limite la fréquence possible à laquelle elle peut être réalisée. Un arrêt d'une charge peut également s'avérer incompatible avec son fonctionnement, certaines charges devant rester en service continu, par exemple des serveurs informatiques ou du matériel médical. Une telle redéfinition des répartitions de charge n'est donc effectuée que lorsque cela est vraiment nécessaire, au détriment de l'équilibrage entre les phases pendant de longues périodes.

L'invention vise à résoudre un ou plusieurs de ces inconvénients. L'invention porte ainsi sur un dispositif d'équilibrage de phase sur un réseau électrique polyphasé, comprenant :

- un convertisseur générant une tension de sortie destinée à alimenter une charge électrique monophasée connectée au réseau électrique polyphasé, le convertisseur étant configuré pour modifier sélectivement le déphasage entre sa tension de sortie et les phases du réseau électrique polyphasé ;
- un module de commande de la synchronisation du convertisseur, apte à :

  - commander la synchronisation de la tension de sortie du convertisseur avec une première phase du réseau électrique ;
  - commander un déphasage progressif de la tension de sortie du convertisseur jusqu'à la synchroniser avec une deuxième phase du réseau électrique ;

- un module de commande de connexion de la charge électrique monophasée au réseau électrique, commandant la connexion de la charge électrique à la tension du convertisseur lorsque celle-ci est synchronisée avec la première phase du réseau, maintenant la charge électrique déconnectée du réseau durant le déphasage progressif de la tension de sortie, commandant la connexion de la charge électrique à la deuxième phase du réseau électrique lorsque la tension de sortie du convertisseur est synchronisée avec la deuxième phase du réseau électrique.

Selon une variante, le dispositif comprend:

- une interface de récupération des consommations de différentes charges monophasées connectées au réseau électrique polyphasé à équilibrer ;
- un module de calcul apte à ;
- déterminer un déséquilibre entre phases sur le réseau électrique polyphasé ;
- identifier une charge monophasée dont un transfert vers une autre phase permettrait d'améliorer le déséquilibre entre phases ;
- transmettre une requête de transfert vers une autre phase pour ladite charge identifiée au module de commande de la synchronisation du convertisseur.

Selon encore une variante, le module de calcul est apte à :

- identifier plusieurs charges monophasées dont un transfert vers d'autres phases permettrait d'améliorer le déséquilibre entre phases ;
- transmettre des requêtes successives de transfert vers d'autres phases pour lesdites charges identifiées au module de commande de la synchronisation du convertisseur.

Selon une autre variante, ledit convertisseur inclut un onduleur.
Selon encore une autre variante, ledit convertisseur comprend un convertisseur alternatif/continu présentant une interface d'alimentation par le réseau polyphasé et dont la sortie alimente l'onduleur.
Selon une variante, le module de commande de la synchronisation de l'onduleur commande le déphasage progressif de la tension de sortie de l'onduleur en modifiant la fréquence de la tension de sortie de l'onduleur.
Selon encore une variante, ledit convertisseur inclut :

- un moteur électrique à variateur de vitesse alimenté par le réseau polyphasé ;
- une génératrice synchrone entraînée par le moteur électrique et générant la tension de sortie.

L'invention porte également sur un système d'équilibrage de phase sur un réseau électrique polyphasé, comprenant :

- un dispositif d'équilibrage tel que décrit ci-dessus ;
- un dispositif d'interconnexion d'une charge électrique au réseau électrique, comprenant :

    - une interface de connexion des phases du réseau électrique polyphasé ;
    - une interface de connexion de la charge électrique ;
    - une interface de connexion d'une ligne d'alimentation sur laquelle la tension de sortie du convertisseur est appliquée ;
    - un dispositif de commutation en communication avec le module de commande de synchronisation du convertisseur et connectant sélectivement l'interface de connexion de la charge électrique à une phase du réseau électrique et/ou à la ligne d'alimentation en fonction de signaux de commande reçus du module de commande.

Selon une variante, le dispositif d'interconnexion comprend un dispositif de mesure de la consommation électrique d'une charge électrique connectée à l'interface de connexion de la charge, ledit dispositif de mesure étant en communication avec le dispositif d'équilibrage.
L'invention porte en outre sur un réseau électrique polyphasé, comprenant :

- des lignes de transport de phases respectives du réseau ;
- une ligne de transport d'une alimentation de transfert de charge ;
- un générateur photovoltaïque alimentant les lignes de transport de phases ;
- un système d'équilibrage tel que décrit ci-dessus, connecté aux lignes de transport de phases et à la ligne de transport de l'alimentation de transfert de charge.

L'invention porte par ailleurs sur un procédé d'équilibrage de charge sur un réseau électrique polyphasé, comprenant les étapes de :

- synchronisation de la tension de sortie d'un onduleur avec une première phase du réseau électrique alimentant une charge monophasée ;
- application de la tension de sortie de l'onduleur sur une ligne de transfert ;
- connexion de la charge à la ligne de transfert et déconnexion de la charge de la première phase ;
- déphasage progressif de la tension de sortie de l'onduleur jusqu'à la synchroniser avec la deuxième phase ;

- connexion de la charge à la deuxième phase.

Selon une variante, l'étape de synchronisation est précédée des étapes de :

- récupération des consommations électriques des différentes charges connectées au réseau électrique ;
- détermination d'un déséquilibre entre phases sur le réseau ;
- identification d'une charge dont un changement de phase permettrait d'améliorer le déséquilibre entre phases à partir des consommations électriques récupérées.

D'autres caractéristiques et avantages de l'invention ressortiront clairement de la description qui en est faite ci-après, à titre indicatif et nullement limitatif, en référence aux dessins annexés, dans lesquels :

- la figure 1 est une représentation schématique d'un dispositif d'équilibrage de phases selon un mode de réalisation de l'invention ;
- la figure 2 est une représentation schématique d'un réseau électrique mettant en oeuvre le dispositif d'équilibrage de la figure 1 ;
- la figure 3 est un diagramme illustrant les courants sur plusieurs phases avant un rééquilibrage ;
- les figures 4a à 4e illustrent différentes configurations de commutateurs durant un rééquilibrage ;
- les figures 5a à 5e illustrent l'évolution de la tension fournie par le dispositif d'équilibrage durant un rééquilibrage ;
- la figure 6 illustre un logigramme de fonctionnement du dispositif d'équilibrage ;
- la figure 7 illustre un logigramme d'exécution d'une commande de transfert de charge ;
- la figure 8 est un exemple simplifié de structure d'onduleur du dispositif d'équilibrage ;
- la figure 9 illustre les déséquilibres entre phases envisageables dans un cas particulier ;
- la figure 10 est une représentation schématique d'un dispositif d'équilibrage selon un autre mode de réalisation de l'invention.

L'invention propose un dispositif d'équilibrage de phases pour des charges monophasées connectées à un réseau électrique polyphasé. Un convertisseur est configuré pour modifier sélectivement le déphasage entre sa tension de sortie et les phases du réseau électrique polyphasé. Le dispositif synchronise la tension de sortie du convertisseur avec une première phase à laquelle une charge monophasée est connectée. Le dispositif commande la connexion de la sortie du convertisseur avec la charge électrique. Le dispositif de commande maintient la charge déconnectée de la première phase durant un déphasage progressif de la tension de sortie du convertisseur jusqu'à une deuxième phase. Le dispositif commande la connexion de la charge avec la deuxième phase.

Ainsi, on peut équilibrer les phases sur le réseau à intervalles réguliers, sans intervention manuelle et en garantissant une continuité de service aux charges connectées au réseau. Le réseau électrique triphasé dispose ainsi d'un équilibrage de phase optimisé en permanence, ce qui permet de résoudre les problématiques de déséquilibre de phase dans un grand nombre d'applications.

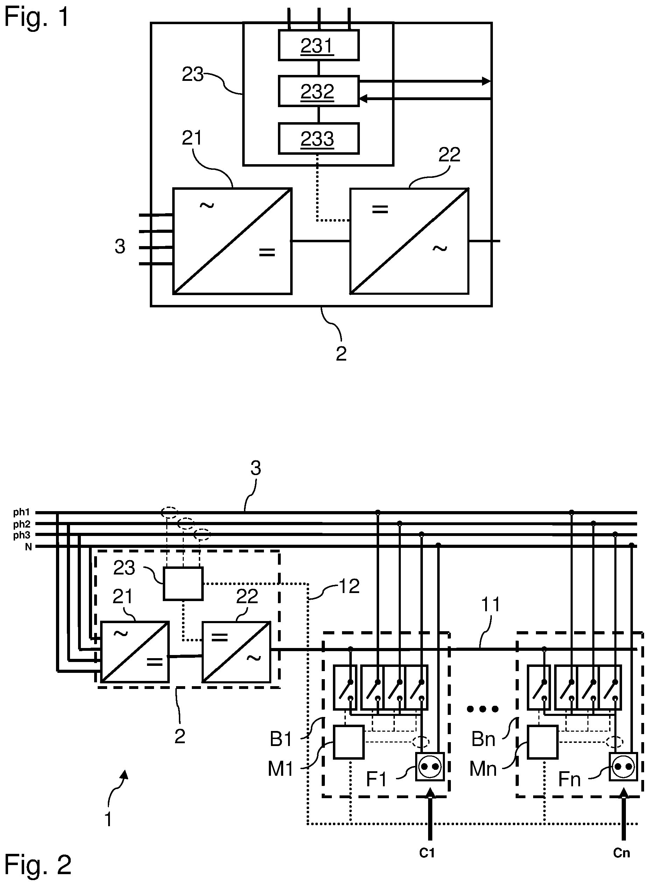

La figure 1 est une représentation schématique d'un mode de réalisation d'un dispositif d'équilibrage de phases 2 selon un premier mode de réalisation de l'invention. Le dispositif d'équilibrage 2 présente une interface de connexion avec un réseau triphasé 3. Dans ce mode de réalisation, le transfert d'une charge entre deux phases est réalisé par l'intermédiaire d'un onduleur dont le déphasage de la tension de sortie peut être modifié par rapport aux phases du réseau triphasé 3. Le dispositif d'équilibrage 2 comprend avantageusement un convertisseur alternatif/continu (redresseur triphasé) 21 recevant les phases ph1, ph2, ph3 et le neutre N du réseau 3. La sortie du convertisseur 21 est connectée à une entrée de l'onduleur 22. La sortie de l'onduleur 22 est destinée à être connectée à des boîtiers d'interconnexion afin d'alimenter transitoirement une charge électrique monophasée, usuellement connectée à une phase du réseau 3.

Le dispositif d'équilibrage 2 comprend en outre un module de commande 23 de l'onduleur, mis en oeuvre par exemple sous forme de microcontrôleur. Le module de commande 23 présente une interface de connexion avec le réseau triphasé 3. Un module de mesure 231 du module de commande 23 peut ainsi déterminer la tension crête, la consommation électrique sur chacune des phases ph1, ph2, ph3, et le phasage de chacune des phases ph1, ph2, ph3 du réseau 3. Le dispositif 2 présente en outre une interface de connexion du module de commande 23 avec un réseau de communication connecté au boîtier d'interconnexion. Le module de commande 23 présente un circuit de traitement 232 connecté à cette interface pour émettre des commandes de connexion/déconnexion à destination des boîtiers d'interconnexion, et recevoir des mesures de consommation électrique en provenance de ces boîtiers d'interconnexion. Le circuit de traitement 232 peut également recevoir le statut de l'interconnexion électrique dans chacun des boîtiers d'interconnexion. Le module de commande 23 présente en outre un circuit de commande 233 connecté à une entrée de l'onduleur 22. Le circuit de commande 233 peut par exemple définir le phasage et/ou l'amplitude de la tension de sortie délivrée par l'onduleur 22.

La figure 2 illustre un exemple de réseau électrique 3 dans lequel le dispositif d'équilibrage 2 est connecté. Le dispositif 2 est connecté au réseau 3 par ses interfaces de connexion. Le dispositif 2 est par ailleurs connecté à une ligne de transfert de charges 11 et à une ligne de communication 12. Des boîtiers d'interconnexion B1 à Bn sont connectés au réseau 3 pour leur connexion à l'une des phases ph1, ph2 ou ph3. Les boîtiers d'interconnexion B1 à Bn sont également connectés à la ligne de transfert de charges 11. Les boîtiers d'interconnexion B1 à Bn comprennent des microcontrôleurs respectifs M1 à Mn. Les boîtiers d'interconnexion B1 à Bn comprennent par ailleurs des fiches de connexion F1 à Fn de charges électriques respectives C1 à Cn. Les microcontrôleurs sont connectés au module de commande 23 par l'intermédiaire de la ligne de communication 12. L'homme du métier pourra choisir toute ligne de communication 12 appropriée, favorisant par exemple la robustesse et la sécurité de transmission entre le dispositif 2 et les boîtiers d'interconnexion B1 à Bn. Chaque microcontrôleur M1 à Mn mesure la consommation électrique de la charge connectée à son boîtier. Des relais connectent sélectivement la fiche du boîtier à l'une des phases du réseau 3 et/ou à la ligne de transfert 11. Chaque fiche F1 à Fn d'un boîtier est par ailleurs connectée au neutre du réseau 3.

Bien que non illustré, chaque dispositif d'interconnexion de charge présente un circuit de surveillance de défaillance apte à ouvrir les interrupteurs Is, I1, I2 et I3 lors de la détection d'un dysfonctionnement ou d'un arrêt d'urgence.

En pratique, le circuit 232 identifie un déséquilibre de phases à partir des mesures de consommation électrique sur le réseau 3. À partir des mesures de consommation électrique fournies par les boîtiers d'interconnexion B1 à Bn et en fonction des statuts d'interconnexion de ces différents boîtiers, le circuit 232 détermine une configuration optimale de l'interconnexion des boîtiers, destinée à rééquilibrer la charge sur les différentes phases du réseau 3. Le circuit 232 commande alors le transfert d'une charge d'une phase du réseau vers une autre. La reconfiguration de l'interconnexion des boîtiers pourra induire les transferts successifs de plusieurs charges d'une phase à une autre. Le circuit de commande 232 pourra définir les transferts de charges à effectuer en effectuant par exemple un compromis entre un équilibrage optimal des charges entre les phases et un nombre réduit de transferts de charges.

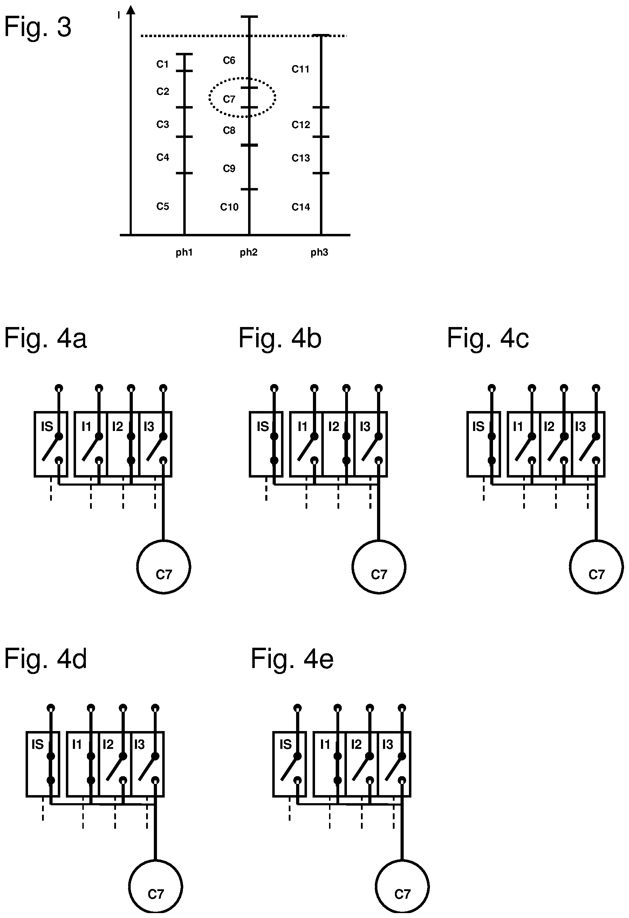

La figure 3 est un diagramme illustrant l'amplitude de courants sur les différentes phases du réseau avant un rééquilibrage. Comme illustré, le courant sur chaque phase est la somme des courants appelés par les charges qui lui sont connectées. Les charges C1 à C5 sont connectées à la phase ph1, les charges C6 à C10 sont connectées à la phase ph2, les charges C11 à C14 sont connectées à la phase ph3. Dans l'exemple illustré, le circuit 232 identifie un déséquilibre de phases. Le courant sur la phase ph2 est ainsi supérieur au courant sur la phase ph3, et le courant sur la phase ph1 est inférieur au courant sur la phase ph3. À partir de l'amplitude du déséquilibre, le circuit 232 détermine si le transfert d'une ou plusieurs charges entre les phases permet d'améliorer l'équilibrage. Le circuit 232 prend notamment en compte le statut de connexion des charges aux différentes phases et l'amplitude des courants appelés par chacune de ces charges. Le circuit 232 détermine ainsi que le transfert de la charge C7 de la phase ph2 à la phase ph1 permet de rééquilibrer les phases du réseau 3 de façon optimale.

Les figures 4a à 4e illustrent la configuration des relais Is, I1, I2 et I3 du boîtier B7 durant le transfert de la charge C7 de la phase ph2 vers la phase ph1.

A la figure 4a, le circuit de traitement 232 maintient le relais I2 fermé et maintient les relais Is, I1 et I3 ouverts. Le circuit de commande 233 commande par ailleurs la synchronisation de la sortie de l'onduleur 22 avec la phase ph2.

À la figure 4b, la sortie de l'onduleur 22 est synchronisée avec la phase ph2 et présente une même amplitude. La charge C7 peut ainsi être connectée simultanément à la phase ph2 et à la ligne de transfert 11. Ainsi, le circuit de traitement 232 ferme le relais Is, maintient le relais I2 fermé et maintient les relais I1 et I3 ouverts.

A la figure 4c, la charge C7 est déconnectée de la phase ph2 pour assurer son transfert vers la phase ph1. Le circuit de traitement 232 ouvre le relais I2, maintient le relais Is fermé et maintient les relais I1 et I3 ouverts. Le circuit de commande 233 commande un déphasage progressif de la tension de sortie de l'onduleur 22 jusqu'à la synchroniser avec la phase ph1. Une tension d'alimentation est donc maintenue sur la ligne 11, ce qui permet d'assurer un service continu pour la charge C7 même durant son transfert. La tension de sortie de l'onduleur 22 est alors en phase avec la phase ph1 et présente une même amplitude.

A la figure 4d, la charge C7 est connectée à la phase ph1 et reste connectée à la ligne de transfert 11. Le circuit de traitement 232 ferme le relais I1, maintient le relais Is fermé et maintient les relais I2 et I3 ouverts.

A la figure 4e, la charge C7 reste connectée uniquement à la phase ph1, le transfert vers cette phase est ainsi réalisé. Le circuit de traitement 232 ouvre le relais Is, maintient le relais I1 fermé et maintient les relais I2 et I3 ouverts. La charge C7 est alors alimentée uniquement par la phase ph1.

Une fois le transfert d'une charge effectué, le transfert d'une autre charge peut être réalisé, en fonction du changement de configuration d'interconnexion déterminé par le circuit de traitement 232.

Ainsi, l'onduleur 22 n'alimente une charge que pendant la durée de son transfert vers une autre phase. Ainsi, l'alimentation d'une charge par l'onduleur 22 n'est que transitoire et les pertes de transformation induites dans le dispositif 2 n'ont qu'un impact transitoire sur la consommation électrique du réseau 3.

Le dimensionnement de la ligne de transfert 11 et de l'onduleur 22 peut être relativement réduit. Ce dimensionnement est en effet défini par la charge présentant potentiellement le plus fort appel de courant, et non par l'ensemble des charges.

Dans cet exemple, la déconnexion entre la charge et la phase ph2 est postérieure à la fermeture du relais Is dans un soucis d'intelligibilité. Cependant, la déconnexion entre la charge et la phase ph2 peut être effectuée quasiment simultanément à la fermeture du relais Is, notamment lorsque l'on utilise des relais statiques. L'ouverture du relais I2 peut ainsi être réalisée dès que l'onduleur est synchronisé avec la phase ph2.

Dans cet exemple, la déconnexion entre la charge et l'onduleur est postérieure à la fermeture du relais I1 dans un soucis d'intelligibilité. Cependant, la déconnexion entre la charge et la l'onduleur peut être effectuée quasiment simultanément à la fermeture du relais I1, notamment lorsque l'on utilise des relais statiques. L'ouverture du relais Is peut ainsi être réalisée dès que l'onduleur est synchronisé avec la phase ph1.

Les relais I1, I2 et I3 sont maintenus ouverts durant la synchronisation de l'onduleur avec la phase souhaitée.

Le déphasage progressif sur la tension de sortie de l'onduleur 22 peut être réalisé en diminuant ou en augmentant légèrement la fréquence de sa tension de sortie jusqu'à être en phase avec la phase cible. Pour un réseau électrique alimenté à 50 Hz, la fréquence de la tension de sortie pourra être abaissée jusqu'à 49,5 Hz ou augmentée jusqu'à 50,5 Hz. De telles variations de fréquence sont tout à fait supportables pour la plupart des charges électriques, la plupart des réseaux électriques publics requérant une tolérance de 1% de variation de fréquence par rapport à la fréquence nominale. Un service continu des charges sans perturbation de fonctionnement peut ainsi être obtenu. De telles variations de fréquence permettent également de synchroniser la tension de sortie de l'onduleur 22 avec une autre phase en un temps relativement réduit. Ainsi, une modification de configuration d'interconnexion des charges peut être réalisée en un temps réduit. Les modifications de configuration d'interconnexion peuvent ainsi être réalisées à intervalles réduits, ce qui favorise un fonctionnement optimal du réseau 3 la majeure partie du temps. On limite ainsi au mieux les pertes en ligne, on réduit le temps nécessaire à la conception des interconnexions de charge (distributions temporelles, distributions géographiques...), on limite au maximum les appels de courants d'équilibrage pour des réseaux polyphasés alimentés par panneaux photovoltaïques, on supprime les interventions manuelles et les coupures de rééquilibrage, on maximise l'autoconsommation d'une éventuelle infrastructure de production d'électricité photovoltaïque proche.

On peut prévoir que des intervalles réduits d'analyse du déséquilibre de phase soient définis avant d'envisager une reconfiguration des interconnexions des charges. L'équilibrage des phases pourra par exemple être mesuré à un intervalle d'une dizaine de minutes ou à un intervalle d'une ou plusieurs heures.

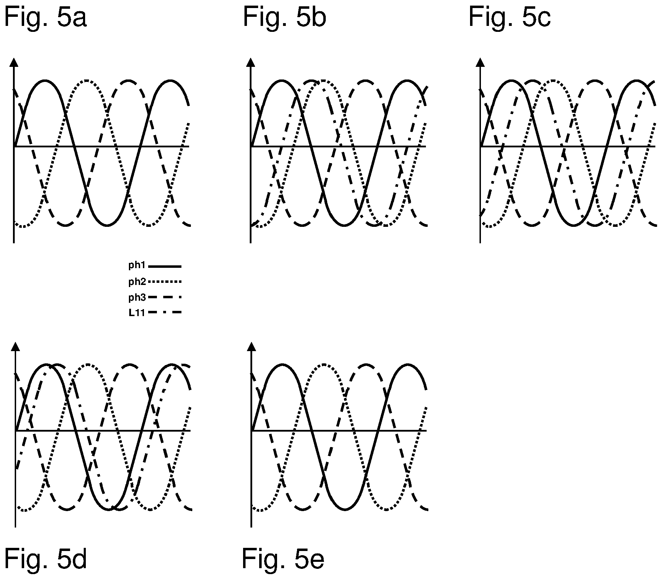

Les figures 5a à 5e illustrent l'évolution de la tension de sortie de l'onduleur 22 durant le transfert de la phase ph2 vers la phase ph1 détaillé précédemment. Le déphasage progressif de la tension de sortie de l'onduleur 22 illustré sur ces figures est induit par une diminution de sa fréquence.

A la figure 5a, la tension sur la ligne de transfert 11 est synchronisée avec la phase ph2. Aux figures 5b à 5d, la charge C7 est uniquement alimentée par la ligne de transfert 11, la tension sur cette ligne de transfert étant progressivement déphasée par rapport à la phase ph2, l'onduleur 22 générant une tension de sortie avec une fréquence inférieure à celle du réseau 3. A la figure 5e, la tension de la ligne de transfert 11 est synchronisée avec la phase ph1 et sa fréquence est à nouveau identique à celle du réseau 3. La charge C7 peut alors être découplée de la ligne de transfert 11 pour être alimentée uniquement par la phase ph1.

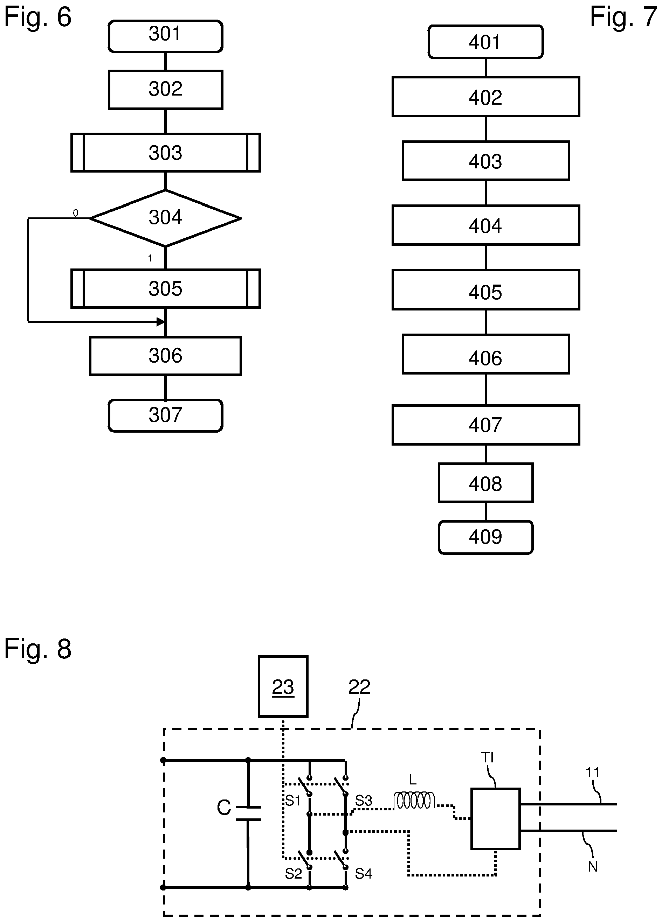

La figure 6 illustre un logigramme de fonctionnement du circuit de traitement 232. Lors d'une étape 301, le circuit de traitement 232 est activé, par exemple par un réveil du module de commande 23. Comme détaillé auparavant, l'activation du circuit de traitement 232 peut intervenir à intervalles réguliers, par exemple de l'ordre de 5 à 10 minutes. Lors d'une étape 302, le circuit de traitement 232 récupère les courants consommés par les charges ainsi que les courants sur les différentes phases du réseau 3. Les mesures de courant récupérées ou effectuées par le circuit de traitement 232 s'étendront avantageusement sur une ou plusieurs dizaines de secondes, pour travailler sur des moyennes de consommation électrique en vue d'optimiser l'équilibrage du réseau 3. Le circuit de traitement 232 dispose également du statut d'interconnexion des boîtiers B1 à Bn. Lors de l'étape 303, le circuit de traitement 232 recherche la meilleure configuration d'interconnexion des charges aux phases du réseau 3. Le circuit de traitement 232 génère alors une liste des transferts de charges entre phases à effectuer. La liste se présente par exemple sous la forme de commandes ayant la forme suivante : $Cp(B_i, ph_j, ph_k)$, $B_i$ correspondant au boîtier d'interconnexion concerné par le transfert de charge, $ph_j$ correspondant à la phase actuellement appliquée à la charge correspondante, $ph_k$ correspondant à la phase vers laquelle le transfert doit être effectué.

Lors de l'étape 304, le circuit de traitement 232 vérifie s'il reste des transferts de charge à effectuer. Si aucun transfert de charge n'est à effectuer, le processus passe à l'étape 306. S'il reste au moins un transfert de charge à effectuer, le processus passe à l'étape 305. À l'étape 305, le circuit de traitement 232 envoie au circuit de commande 233 une commande de transfert de charge $Cp(B_i, ph_j, ph_k)$ présente dans la liste des transferts de charges à effectuer. À la fin de l'étape 305, le circuit de traitement 232 retire cette dernière commande de transfert de charge de la liste des transferts de charges à effectuer.

Lors de l'étape 306, on détermine qu'un transfert de charges n'est pas nécessaire ou que l'ensemble des transferts de charges ont été réalisés. Le module de commande 23 passe alors en veille. À l'étape 307, le processus d'équilibrage se termine.

La figure 7 est un logigramme d'exécution d'une commande de transfert de charge par le circuit de commande 233. L'exécution d'une commande de transfert peut par exemple être réalisée sous forme de tâche exécutée par le module de commande 23.

Lors d'une étape 401, le circuit de commande 233 reçoit une commande de transfert de charge $Cp(B_i, ph_j, ph_k)$. Lors de l'étape 402, le circuit de commande 233 démarre l'onduleur 22. Le circuit de commande 233 commande la synchronisation de la tension de sortie de l'onduleur 22 avec la phase $ph_j$. Lors de l'étape 403, le circuit 232 commande la connexion de la phase $ph_j$ et de la sortie de l'onduleur à la charge du boîtier Bi. Lors de l'étape 404, le circuit 232 commande la déconnexion de la phase $ph_j$ de la charge du boîtier Bi. Lors de l'étape 405, le circuit 233 commande la synchronisation progressive de la tension de sortie de l'onduleur 22 avec la phase $ph_k$. Lors de l'étape 406, le circuit 232 commande la connexion de la phase $ph_k$ et de la sortie de l'onduleur à la charge du boîtier Bi. Lors de l'étape 407, le circuit 232 commande la déconnexion de la tension de sortie de l'onduleur 22 de la charge du boîtier Bi. Lors de l'étape 408, l'onduleur 22 est désactivé. L'exécution de la commande de transfert de charge se termine à l'étape 409.

La figure 8 illustre de façon schématique une structure d'un exemple d'onduleur 22 apte à générer une tension de sortie permettant un transfert de charge. L'onduleur 22 est un onduleur à modulation de largeur d'impulsion, présentant par exemple une fréquence de hachage de 18 kHz. L'onduleur 22 reçoit une tension continue sur son entrée, cette tension étant par exemple fournie par le convertisseur 21. La tension continue est appliquée aux bornes d'un condensateur C et aux bornes d'un groupe d'interrupteurs S1 à S4 de façon connue en soi. Un noeud intermédiaire entre les interrupteurs S1 et S2 est connecté à une première borne d'entrée d'un transformateur d'isolation TI par l'intermédiaire d'une inductance L. Un noeud intermédiaire entre les interrupteurs S3 et S4 est connecté à une deuxième borne d'entrée et du transformateur d'isolation TI. Une première sortie du transformateur d'isolation TI est connectée à la ligne de transfert 11, une deuxième sortie du transformateur d'isolation TI étant connectée au neutre N du réseau 3. Les interrupteurs S1 à S4 sont commandés par le module de commande 23, et en particulier par le circuit 233, de façon à générer une tension alternative dont la phase est asservie.

La synchronisation de la sortie de l'onduleur 22 avec une phase ou son transfert progressif vers une autre phase peuvent être réalisées par le module 23 comme suit. On prendra comme hypothèse l'utilisation d'un onduleur 22 à modulation de largeur impulsion avec une fréquence de hachage de 18 kHz.

On définit par convention les valeurs $n_i$ et $n_i max$ respectivement comme la phase instantanée et la période d'une phase d'indice i. Les valeurs $n_i$ et $n_i max$ sont exprimées en nombre de périodes d'une horloge H1.

Le signal de commande de largeur d'impulsion est généré par la sortie d'un convertisseur double rampe. Un signal d'horloge T0 est appliqué sur une première entrée du convertisseur et une valeur Buffer0 est appliquée comme référence sur une deuxième entrée du convertisseur. Le signal de commande de largeur impulsion sera utilisé pour commander la commutation de transistors respectifs constituant les interrupteurs S1 à S4.

Un tableau mémorise des valeurs numériques de la fonction sinus sur une période. Ce tableau mémorise par exemple 360 valeurs Sinus(n), avec n un indice compris entre 0 et 359.

On utilise par ailleurs un signal d'horloge H1 ayant une fréquence de 4,5 kHz (quatre fois inférieure à la fréquence de H0). H1 déclenche un programme d'interruption H1_IRQ.

Le programme d'interruption H1_IRQ a pour fonction d'incrémenter les valeurs des variables $n_i$ et de mettre à jour la valeur de Buffer0 pour modifier le rapport cyclique à la sortie du convertisseur double rampe. Le tableau des valeurs Sinus(n) est utilisé pour récupérer les valeurs de Buffer0 à appliquer sur le convertisseur double rampe.

Le module 23 comporte un dispositif de détection des passages à zéro sur front montant de chacune des tensions des phases ph1 à ph3. Chaque détection d'un passage à zéro pour une phase déclenche un programme d'interruption IRQ2 pour cette phase. L'exécution du programme IRQ2 par un passage à zéro sur front montant de la phase i induit la copie de la valeur $n_i$ dans $n_i max$ puis la mise à zéro de la valeur $n_i$. La valeur $n_i max$ correspond alors à une mesure de la période de la phase i exprimée en nombre de périodes de l'horloge H1. Pour une fréquence du réseau 3 de 50Hz, l'ordre de grandeur de $n_i max$ doit avoisiner 90.

Les valeurs $n_i$ et $n_i max$ permettent donc d'avoir instantanément accès à la valeur de phase d'une phase i, exprimée en radian par la relation suivante :

$$\Psi i = 2\pi * n_i / n_i max$$

Pour synchroniser la sortie de l'onduleur 22 avec la phase i, on modifie la valeur de Buffer0 dans le programme H1_IRQ en récupérant la valeur Sinus(n) dans le tableau, avec $n = n_i * 360 / n_i max$

Pour tenir compte d'une variation de l'amplitude sur le réseau 3, un coefficient de gain G est avantageusement appliqué à la valeur Sinus(n) pour permettre d'adapter la tension de sortie de l'onduleur à la phase à laquelle elle doit être synchronisée.

Lors de la synchronisation de la tension de sortie de l'onduleur 22 avec une phase i, la valeur Buffer0 est alors définie par $Buffer0 = G * Sinus(n_i * 360 / n_i max)$

Lors du transfert de la tension de sortie de l'onduleur 22 d'une phase i vers une phase j, la valeur Buffer0 utilisée est alors la suivante :

$$Buffer0 = G*Sinus((offset+n_i)*360/n_imax)$$

Avec offset une valeur incrémentée (ou décrémentée) par l'exécution d'un programme d'interruption H2_IRQ, ce programme d'interruption étant par exemple exécutée à une fréquence de 10Hz. La valeur prend initialement une valeur nulle lors du début d'un transfert de phase. On considère que le transfert est terminé lorsque la valeur offset atteint la valeur $(n_j-n_i)$, ce qui signifie que la tension de sortie de l'onduleur 22 est alors synchronisée avec la phase j.

Ainsi, une charge peut progressivement être transférée en un temps relativement réduit d'une phase à une autre sans lui appliquer un changement de phase brusque. Avec une fréquence d'incrémentation de la valeur offset de 10Hz, et en utilisant sélectivement une incrémentation ou une décrémentation en fonction de la phase vers laquelle le transfert est effectué, la durée d'un transfert de charge peut être réduite à environ 3 secondes, avec une excursion en fréquence sur la ligne 11 limitée à 0,11Hz.

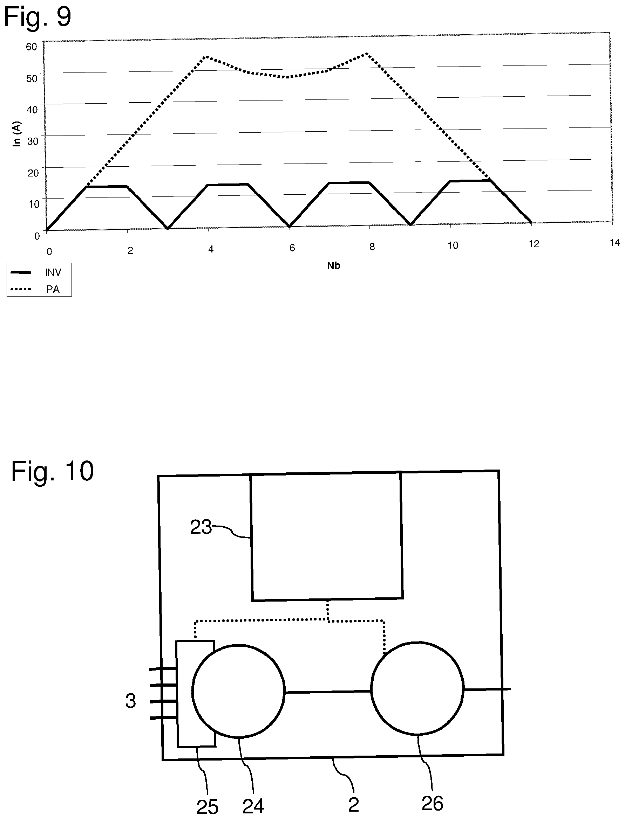

La figure 9 est un comparatif des déséquilibres de phase dans un type d'installation dans lequel l'invention peut être mise en oeuvre. L'installation est une station de recharge de véhicules électriques accessible au public. Dans une telle installation, des places de stationnement accessibles au public sont munies de postes de recharge des batteries des véhicules. Les postes de recharge sont connectés à un réseau électrique triphasé. Les véhicules connectés au poste de recharge constituent des charges électriques monophasées.

La figure 9 illustre en ordonnée le courant de neutre maximal sur le réseau triphasé, représentatif du déséquilibre de phases que peuvent potentiellement induire les connexions au poste de recharge. On illustre en abscisse le nombre de véhicules connectés au poste de recharge. On suppose que chaque véhicule et son poste de recharge forme une charge électrique équivalente de 3kW.

Selon l'état de la technique, les postes de recharge sont connectés de façon définitive à des phases respectives du réseau triphasé. Du fait que la station de recharge est accessible au public et que les utilisateurs peuvent connecter leur véhicule à un poste de recharge de leur choix, on peut se retrouver dans une situation dans laquelle seulement quatre véhicules sont connectés à des postes de recharge, ces postes de recharge étant connectés à une même phase du réseau triphasé. Le courant de neutre dans l'exemple atteint alors environ 52 A.

Selon l'invention, les postes de recharge sont connectés dynamiquement à une phase respective de façon à équilibrer les charges sur le réseau triphasé. Un tel rééquilibrage dynamique permet de garantir que la différence entre les différents nombres de véhicules connectés aux phases du réseau triphasé est au maximum de 1. Le courant de neutre dans l'exemple atteint alors au maximum 13A, quel que soit le nombre de véhicules connectés.

L'invention s'avère donc particulièrement avantageuse pour des installations électriques dans lesquels le concepteur de l'installation ne peut pas prévoir au préalable comment seront connectées les différentes charges monophasées, temporellement et spatialement.

L'invention s'avère particulièrement appropriée pour un grand nombre d'applications différentes.

L'invention s'avère particulièrement appropriée pour des installations photovoltaïques alimentant des réseaux triphasés. De telles installations s'avèrent particulièrement vulnérables à des déséquilibres de phase. Sur de telles installations, un déséquilibre de phase peut induire une forte limitation des charges pouvant être alimentées ou la nécessité d'extraire du courant d'un réseau électrique pour injecter du courant dans l'une des phases, ce qui annihile les effets bénéfiques de l'installation photovoltaïque. Avec l'évolution des cadres législatifs, les installations photovoltaïques sont de plus en plus vouées à alimenter un réseau polyphasé local plutôt que de réinjecter du courant dans un réseau polyphasé public. Les réseaux polyphasés locaux doivent ainsi présenter une plus grande autonomie par rapport au réseau polyphasé public.

L'invention s'avère également particulièrement appropriée pour la gestion d'une installation de recharge de véhicules électriques accessibles au public. En effet, la répartition et la durée de recharge sur chacun des emplacements est extrêmement aléatoire, ce qui peut conduire à des déséquilibres de phase conséquents. Chaque installation de recharge nécessiterait sinon de faire l'objet d'une étude en fonction des habitudes de recharge spécifiques à leur emplacement ou au public concerné.

L'invention peut également s'avérer avantageuse pour redéfinir l'interconnexion au réseau de groupes de logements d'habitation. L'invention peut également s'appliquer avantageusement dans des locaux de bureau, dans lesquels les charges connectées au réseau peuvent connaître de fortes variations en cours de journée.

L'invention s'applique également avantageusement à des parcs de serveurs informatiques, dans lesquels les appels de courant peuvent être importants et très variables d'une phase à une autre, et dans lesquels il s'avère primordial de maintenir une continuité de service tout en procédant à un équilibrage régulier.

Bien que l'invention ait été décrite dans l'exemple particulier d'un réseau électrique triphasé, celle-ci s'applique bien entendu à tout autre type de réseau électrique polyphasé.

Le statut d'interconnexion des boîtiers B1 à Bn peut être mémorisé suite aux commandes émises par le dispositif 2, ou peut être renseigné par les microcontroleurs M1 à Mn par l'intermédiaire de la ligne de communication 12.

Le dispositif 2 décrit comprend un convertisseur alternatif/continu. Un convertisseur alternatif/continu indépendant du dispositif 2 peut également être utilisé. Une source de tension continue externe peut également être utilisée pour alimenter l'entrée de l'onduleur 22.

La figure 10 est une représentation schématique d'un autre mode de réalisation d'un dispositif d'équilibrage de phase 2 selon l'invention. Le convertisseur alternatif/continu 21 et l'onduleur 22 sont ici remplacés par un moteur électrique 24 muni d'un variateur de vitesse 25 et par une génératrice synchrone 26. La combinaison du moteur 24 et de la génératrice 26 forme un convertisseur capable de modifier le déphasage entre sa tension de sortie et la tension sur le réseau triphasé.

Le moteur électrique 24 est par exemple à courant continu ou alternatif mais dispose d'un variateur de vitesse 25, permettant ainsi de fixer sa vitesse de rotation. Le moteur électrique 24 est alimenté par le réseau électrique triphasé. Le moteur électrique 24 entraîne le rotor de la génératrice synchrone 26 en rotation. La génératrice 26 est par exemple à rotor bobiné.

La tension générée aux bornes de la génératrice 26 présente par conséquent la fréquence définie par le moteur électrique 24. Le moteur électrique 24 et la génératrice 26 pourront présenter une puissance nominale comparable à celle de la charge la plus importante que l'on souhaite transférer entre deux phases.

Le fonctionnement du moteur 24 et de la génératrice 26 est supervisé par le module de commande 23. Le module de commande 23 peut mettre en oeuvre une première boucle de régulation pour la fréquence et la phase de la tension de sortie de la génératrice 26, et une deuxième boucle de régulation pour la valeur efficace de la tension de sortie de la génératrice 26.

La première boucle de régulation peut jouer sur la vitesse de rotation du rotor de la génératrice 26. La deuxième boucle de régulation peut jouer sur le courant d'excitation de l'inducteur de la génératrice 26.

Pour réaliser par exemple le déplacement d'une charge monophasée de la phase ph1 à la phase ph2, on peut procéder comme suit :

- on commande le moteur 24 et on alimente l'inducteur de la génératrice 26 de sorte que sa tension de sortie soit en phase avec la phase ph1 et présente la même amplitude ;
- on connecte la sortie de la génératrice à la charge électrique. La charge électrique est alors alimentée à la fois par la phase ph2 et par la tension de sortie de la génératrice 26.
- on déconnecte la charge électrique de la phase ph1. La charge électrique n'est alimentée que par la tension de sortie de la génératrice 26.
- on modifie légèrement la vitesse de rotation du moteur 24 par l'intermédiaire du variateur 25, la vitesse de rotation du rotor de la génératrice 26 étant modifiée en conséquence. La fréquence de la tension de sortie de la génératrice 26 est modifiée en conséquence. La vitesse de rotation du moteur 24 reste modifiée jusqu'à ce que la tension de sortie de la génératrice 26 soit synchronisée avec la phase ph2.
- on connecte la phase ph2 à la charge électrique. La charge électrique est alors alimentée par la génératrice 26 et par la phase ph2.
- on déconnecte la sortie de la génératrice 26 de la charge électrique. La charge électrique a bien été transférée de la phase ph1 à la phase p2.

## Revendications

1. Dispositif d'équilibrage de phase (2) sur un réseau électrique polyphasé, comprenant :

    - un convertisseur (22) générant une tension de sortie destinée à alimenter une charge électrique monophasée (C1) connectée au réseau électrique polyphasé (3), le convertisseur étant configuré pour modifier sélectivement le déphasage entre sa tension de sortie et les phases du réseau électrique polyphasé ; **caractérisé par**
    - un module de commande (23) de la synchronisation du convertisseur (22), apte à :

        - commander la synchronisation de la tension de sortie du convertisseur avec une première phase (ph1) du réseau électrique ;
        - commander un déphasage progressif de la tension de sortie du convertisseur jusqu'à la synchroniser avec une deuxième phase (ph2) du réseau électrique ;

    - un module de commande de connexion (23) de la charge électrique monophasée au réseau électrique, commandant la connexion de la charge électrique à la tension du convertisseur lorsque celle-ci est synchronisée avec la première phase du réseau, maintenant la charge électrique déconnectée du réseau durant le déphasage progressif de la tension de sortie, commandant la connexion de la charge électrique à la deuxième phase du réseau électrique lorsque la tension de sortie du convertisseur est synchronisée avec la deuxième phase du réseau électrique.

2. Dispositif d'équilibrage (2) de charge selon la revendication 1, comprenant :

- une interface de récupération des consommations de différentes charges monophasées connectées au réseau électrique polyphasé à équilibrer ;
- un module de calcul (232) apte à ;

- déterminer un déséquilibre entre phases sur le réseau électrique polyphasé ;
- identifier une charge monophasée (C7) dont un transfert vers une autre phase permettrait d'améliorer le déséquilibre entre phases ;
- transmettre une requête de transfert vers une autre phase pour ladite charge identifiée au module de commande de la synchronisation du convertisseur.

3. Dispositif d'équilibrage de charge selon la revendication 2, dans lequel le module de calcul (232) est apte à :

- identifier plusieurs charges monophasées dont un transfert vers d'autres phases permettrait d'améliorer le déséquilibre entre phases ;
- transmettre des requêtes successives de transfert vers d'autres phases pour lesdites charges identifiées au module de commande de la synchronisation du convertisseur.

4. Dispositif d'équilibrage de charge selon l'une quelconque des revendications précédentes, dans lequel ledit convertisseur inclut un onduleur (22).

5. Dispositif d'équilibrage de charge selon la revendication 4, dans lequel ledit convertisseur comprend un convertisseur alternatif/continu (21) présentant une interface d'alimentation par le réseau polyphasé et dont la sortie alimente l'onduleur (22).

6. Dispositif d'équilibrage de charge selon la revendication 4 ou 5, dans lequel le module (23) de commande de la synchronisation de l'onduleur commande le déphasage progressif de la tension de sortie de l'onduleur en modifiant la fréquence de la tension de sortie de l'onduleur.

7. Dispositif d'équilibrage de charge selon l'une quelconque des revendications précédentes, dans lequel ledit convertisseur inclut :

- un moteur électrique à variateur de vitesse alimenté par le réseau polyphasé ;
- une génératrice synchrone entraînée par le moteur électrique et générant la tension de sortie.

8. Système d'équilibrage de phase sur un réseau électrique polyphasé, comprenant :

- un dispositif d'équilibrage (2) selon l'une quelconque des revendications précédentes ;
- un dispositif d'interconnexion (B1) d'une charge électrique au réseau électrique (3), comprenant :

- une interface de connexion des phases du réseau électrique polyphasé ;
- une interface de connexion (F1) de la charge électrique ;
- une interface de connexion d'une ligne d'alimentation (11) sur laquelle la tension de sortie du convertisseur est appliquée ;
- un dispositif de commutation (M1, Is, I1, I2, I3) en communication avec le module de commande (23) de synchronisation du convertisseur et connectant sélectivement l'interface de connexion (F1) de la charge électrique à une phase du réseau électrique et/ou à la ligne d'alimentation en fonction de signaux de commande reçus du module de commande (23).

9. Système d'équilibrage de charge selon la revendication 8, dans lequel le dispositif d'interconnexion (B1) comprend un dispositif de mesure de la consommation électrique d'une charge électrique connectée à l'interface de connexion (F1) de la charge, ledit dispositif de mesure étant en communication avec le dispositif d'équilibrage (2).

10. Réseau électrique polyphasé, comprenant :

- des lignes de transport (ph1, ph2, ph3) de phases respectives du réseau ;
- une ligne de transport (11) d'une alimentation de transfert de charge ;
- un générateur photovoltaïque alimentant les lignes de transport de phases ;
- un système d'équilibrage selon la revendication 8 ou 9 connecté aux lignes de transport de phases et à la ligne de transport de l'alimentation de transfert de charge.

11. Procédé d'équilibrage de charge sur un réseau électrique polyphasé (3), comprenant les étapes de :

- synchronisation de la tension de sortie d'un onduleur (22) avec une première phase du réseau électrique alimentant une charge monophasée ;
- application de la tension de sortie de l'onduleur sur une ligne de transfert (11) ;
- connexion de la charge à la ligne de transfert (11) et déconnexion de la charge de la première phase ;
- déphasage progressif de la tension de sortie de l'onduleur jusqu'à la synchroniser avec la deuxième phase ;
- connexion de la charge à la deuxième phase.

12. Procédé d'équilibrage de charge selon la revendication 11, dans lequel l'étape de synchronisation est précédée des étapes de :

- récupération des consommations électriques des différentes charges connectées au réseau électrique ;
- détermination d'un déséquilibre entre phases sur le réseau ;
- identification d'une charge dont un changement de phase permettrait d'améliorer le déséquilibre entre phases à partir des consommations électriques récupérées.


**Patentansprüche**

1. Phasenausgleichsvorrichtung (2) in einem mehrphasigen elektrischen Netzwerk, umfassend:

- einen Wandler (22), der eine Ausgangsspannung erzeugt, die dazu bestimmt ist, eine einphasige elektrische Last (C1), die an das mehrphasige elektrische Netzwerk (3) angeschlossen ist, zu versorgen, wobei der Wandler eingerichtet ist, um selektiv die Phasenverschiebung zwischen seiner Ausgansspannung und den Phasen des mehrphasigen elektrischen Netzwerks zu verändern;
**gekennzeichnet durch**
- ein Modul zur Steuerung (23) der Synchronisation des Wandlers (22), das geeignet ist:
- die Synchronisation der Ausgangsspannung des Wandlers mit einer ersten Phase (ph1) des elektrischen Netzwerks zu steuern;
- eine progressive Phasenverschiebung der Ausgangsspannung des Wandlers bis zu ihrer Synchronisation mit einer zweiten Phase (ph2) des elektrischen Netzwerks zu steuern;
- ein Modul zur Steuerung (23) eines Anschlusses der einphasigen elektrischen Last an das elektrische Netzwerk, das den Anschluss der elektrischen Last an die Spannung des Wandlers steuert, wenn diese mit der ersten Phase des Netzwerks synchronisiert ist, die elektrische Last von dem Netzwerk während der progressiven Phasenverschiebung der Ausgangsspannung getrennt hält, den Anschluss der elektrischen Last an die zweite Phase des elektrischen Netzwerks steuern, wenn die Ausgangsspannung des Wandlers mit der zweiten Phase des elektrischen Netzwerks synchronisiert ist.

2. Lastausgleichsvorrichtung (2) nach Anspruch 1, umfassend:

- eine Schnittstelle zur Rückgewinnung des Verbrauchs von verschiedenen einphasigen Lasten, die an das auszugleichende mehrphasige elektrische Netzwerk angeschlossen sind;
- ein Rechenmodul (232), das geeignet ist:
- ein Ungleichgewicht zwischen Phasen in dem mehrphasigen elektrischen Netzwerk zu bestimmen;
- eine einphasige Last (C7) zu identifizierten, deren Transfer zu einer anderen Phase es ermöglichen würde, das Ungleichgewicht zwischen Phasen zu verbessern;
- einen Antrag auf Transfer zu einer anderen Phase für die identifizierte Last an das Modul zur Steuerung der Synchronisation des Wandlers zu übertragen.

3. Lastausgleichsvorrichtung nach Anspruch 2, bei der das Rechenmodul (232) geeignet ist:

- mehrere einphasige Lasten zu identifizieren, deren Transfer zu anderen Phasen es ermöglichen würde, das Ungleichgewicht zwischen Phasen zu verbessern;
- aufeinanderfolgende Anträge auf Transfer zu anderen Phasen für die identifizierten Lasten an das Modul zur Steuerung der Synchronisation des Wandlers zu übertragen.

4. Lastausgleichsvorrichtung nach einem der vorhergehenden Ansprüche, bei der der Wandler einen Wechselrichter (22) einschließt.

5. Lastausgleichsvorrichtung nach Anspruch 4, bei der der Wandler einen Wechselstrom-/Gleichstromwandler (21) umfasst, der eine Schnittstelle zur Versorgung durch das mehrphasige Netzwerk aufweist, und dessen Ausgang den Wechselrichter (22) versorgt.

6. Lastausgleichsvorrichtung nach Anspruch 4 oder 5, bei der das Modul (23) zur Steuerung der Synchronisation des Wechselrichters die progressive Phasenverschiebung der Ausgangsspannung des Wechselrichters steuert, wobei es die Frequenz der Ausgangsspannung des Wechselrichters verändert.

7. Lastausgleichsvorrichtung nach einem der vorhergehenden Ansprüche, bei der der Wandler einschließt:

- einen Elektromotor mit Drehzahlregler, der vom mehrphasigen Netzwerk versorgt wird;
- einen Synchrongenerator, der vom Elektromotor angetrieben wird und die Ausgangsspannung erzeugt.

8. Phasenausgleichssystem in einem mehrphasigen elektrischen Netzwerk, umfassend:

- eine Ausgleichsvorrichtung (2) nach einem der vorhergehenden Ansprüche;
- eine Anschlussvorrichtung (B1) einer elektrischen Last an das elektrische Netzwerk (3), umfassend:
- eine Anschlussschnittstelle der Phasen des mehrphasigen elektrischen Netzwerks;
- eine Anschlussschnittstelle (F1) der elektrischen Last;
- eine Anschlussschnittstelle einer Versorgungsleitung (11), an die die Ausgangsspannung des Wandlers angelegt wird;
- eine Umschaltvorrichtung (M1, Is, I1, I2, I3), die mit dem Modul zur Steuerung (23) der Synchronisation des Wandlers in Verbindung steht und die Anschlussschnittstelle (F1) der elektrischen Last selektiv an eine Phase des elektrischen Netzwerks und/oder an die Versorgungsleitung anschließt, in Abhängigkeit von Steuersignalen, die von dem Steuermodul (23) empfangen werden.

9. Lastausgleichssystem nach Anspruch 8, bei dem die Anschlussvorrichtung (B1) eine Vorrichtung zum Messen des Energieverbrauchs einer elektrischen Last, die an die Anschlussschnittstelle (F1) der Last angeschlossen ist, umfasst, wobei die Messvorrichtung mit der Ausgleichsvorrichtung (2) in Verbindung steht.

10. Mehrphasiges elektrisches Netzwerk, umfassend:

- Transportleitungen (ph1, ph2, ph3) von jeweiligen Phasen des Netzwerks;
- eine Transportleitung (11) einer Versorgung zum Transfer einer Last;
- einen Photovoltaikgenerator, der die Phasentransportleitungen versorgt;
- ein Ausgleichssystem nach Anspruch 8 oder 9, das an die Phasentransportleitungen und die Transportleitung der Versorgung zum Transfer einer Last angeschlossen ist.

11. Lastausgleichsverfahren in einem mehrphasigen elektrischen Netzwerk (3), umfassend die folgenden Schritte:

- Synchronisation der Ausgangsspannung eines Wechselrichters (22) mit einer ersten Phase des elektrischen Netzwerks, die eine einphasige Last versorgt;
- Anlegen der Ausgangsspannung des Wechselrichters an eine Transferleitung (11);
- Anschluss der Last an die Transferleitung (11) und Trennen der Last von der ersten Phase;
- progressive Phasenverschiebung der Ausgangsspannung des Wechselrichters bis zur Synchronisation mit der zweiten Phase;

- Anschluss der Last an die zweite Phase.

12. Lastausgleichsverfahren nach Anspruch 11, bei dem vor dem Synchronisationsschritt die folgenden Schritte ausgeführt werden:

- Rückgewinnung des Stromverbrauchs der verschiedenen an das elektrische Netzwerk angeschlossenen Lasten;
- Bestimmung eines Ungleichgewichts zwischen Phasen in dem Netzwerk;
- Identifikation einer Last, deren Phasenänderung es ermöglichen würde, das Ungleichgewicht zwischen Phasen auf Basis des rückgewonnenen Stromverbrauchs zu verbessern.

**Claims**

1. Device (2) for phase balancing on a polyphase electrical network, comprising:

- a converter (22) generating an output voltage intended to supply a single-phase electrical load (C1) connected to the polyphase electrical network (3), the converter being configured to selectively modify the phase shift between its output voltage and the phases of the polyphase electrical network; **characterized by**
- a module (23) for controlling the synchronization of the converter (22), able to:

  - control the synchronization of the output voltage of the converter with a first phase (ph1) of the electrical network;
  - control a progressive phase shifting of the output voltage of the converter until it is synchronized with a second phase (ph2) of the electrical network;

- a module (23) for controlling connection of the single-phase electrical load to the electrical network, controlling the connection of the electrical load to the converter voltage when the latter is synchronized with the first phase of the network, maintaining the electrical load disconnected from the network during the progressive phase shifting of the output voltage, controlling the connection of the electrical load to the second phase of the electrical network when the converter output voltage is synchronized with the second phase of the electrical network.

2. Load-balancing device (2) according to Claim 1, comprising:

- an interface for recovering the consumptions of various single-phase loads connected to the polyphase electrical network to be balanced;
- a calculation module (232) able to;

  - determine an imbalance between phases on the polyphase electrical network;
  - identify a single-phase load (C7) for which a transfer to another phase would make it possible to improve the imbalance between phases;
  - transmit a request for transfer to another phase for said identified load to the module for controlling the synchronization of the converter.

3. Load-balancing device according to Claim 2, in which the calculation module (232) is able to:

- identify several single-phase loads for which a transfer to other phases would make it possible to improve the imbalance between phases;
- transmit successive requests for transfer to other phases for said identified loads to the module for controlling the synchronization of the converter.

4. Load-balancing device according to any one of the preceding claims, in which said converter includes an inverter (22).

5. Load-balancing device according to Claim 4, in which said converter comprises an AC/DC converter (21) exhibiting an interface for power supply by the polyphase network and whose output supplies the inverter (22).

6. Load-balancing device according to Claim 4 or 5, in which the module (23) for controlling the synchronization of the inverter controls the progressive phase shifting of the output voltage of the inverter by modifying the frequency of the output voltage of the inverter.

7. Load-balancing device according to any one of the preceding claims, in which said converter includes:

   - an electric motor with variable speed drive supplied by the polyphase network;
   - a synchronous generator driven by the electric motor and generating the output voltage.

8. System for phase balancing on a polyphase electrical network, comprising:

   - a balancing device (2) according to any one of the preceding claims;
   - a device (B1) for interconnecting an electrical load to the electrical network (3), comprising:

     - an interface for connecting the phases of the polyphase electrical network;
     - an interface (F1) for connecting the electrical load;
     - an interface for connecting a power supply line (11) on which the output voltage of the converter is applied;
     - a switching device (M1, Is, I1, I2, I3) in communication with the module (23) for controlling synchronization of the converter and selectively connecting the interface (F1) for connecting the electrical load to a phase of the electrical network and/or to the power supply line as a function of control signals received from the control module (23).

9. Load-balancing system according to Claim 8, in which the interconnection device (B1) comprises a device for measuring the electrical consumption of an electrical load connected to the connection interface (F1) of the load, said measurement device being in communication with the balancing device (2).

10. Polyphase electrical network, comprising:

    - transport lines (ph1, ph2, ph3) for respective phases of the network;
    - a transport line (11) for a load transfer power supply;
    - a photovoltaic generator supplying the phases transport lines;
    - a balancing system according to Claim 8 or 9 connected to the phases transport lines and to the transport line for the load transfer power supply.

11. Method of load balancing on a polyphase electrical network (3), comprising the steps of:

    - synchronization of the output voltage of an inverter (22) with a first phase of the electrical network supplying a single-phase load;
    - application of the output voltage of the inverter on a transfer line (11);
    - connection of the load to the transfer line (11) and disconnection of the load from the first phase;
    - progressive phase shifting of the output voltage of the inverter until it is synchronized with the second phase;
    - connection of the load to the second phase.

12. Load-balancing method according to Claim 11, in which the synchronization step is preceded by the steps of:

    - recovery of the electrical consumptions of the various loads connected to the electrical network;
    - determination of an imbalance between phases on the network;
    - identification of a load for which a change of phase would make it possible to improve the imbalance between phases on the basis of the electrical consumptions recovered.

# Fig. 1

# Fig. 2

EP 2 676 348 B1

**Fig. 3**

**Fig. 4a**

**Fig. 4b**

**Fig. 4c**

**Fig. 4d**

**Fig. 4e**

Fig. 5a

Fig. 5b

Fig. 5c

ph1 ——
ph2 ········
ph3 — — ·
L11 — · —

Fig. 5d

Fig. 5e

Fig. 6

301
302
303
304
305
306
307

Fig. 7

401
402
403
404
405
406
407
408
409

Fig. 8

## Fig. 9

## Fig. 10

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9826489 A